Europäisches Patentamt

European Patent Office

Office européen des brevets

(11) Publication number: **0 287 394 B1**

# EUROPEAN PATENT SPECIFICATION

(45) Date of publication of patent specification: **02.03.94** (51) Int. Cl.5: **G11B 7/26**

(21) Application number: **88303428.2**

(22) Date of filing: **15.04.88**

(54) **Process for producing optical recording medium.**

(30) Priority: **16.04.87 JP 92087/87**
**27.04.87 JP 101814/87**
**30.04.87 JP 104676/87**
**05.06.87 JP 140083/87**

(43) Date of publication of application:
**19.10.88 Bulletin 88/42**

(45) Publication of the grant of the patent:
**02.03.94 Bulletin 94/09**

(84) Designated Contracting States:
**DE FR GB IT**

(56) References cited:
**EP-A- 0 108 258**
**WO-A-82/02969**
**DE-A- 2 402 385**
**DE-A- 2 747 433**
**DE-B- 2 531 562**

**Optical Information Storage (1979), SPIE, vol. 177, Review of Optical Storage Media, R.G. Zech.**

**Sears, Zemansky, Young, University Physics, Chapter 42, Addison Wesley 1977.**

(73) Proprietor: **CANON KABUSHIKI KAISHA**
**30-2, 3-chome, Shimomaruko,**
**Ohta-ku**
**Tokyo(JP)**

(72) Inventor: **Ishikawa, Nobuyuki**
**3-23-4 Ohoka**
**Minami-ku**
**Yokohama-shi Kanagawa-ken(JP)**
Inventor: **Kohno, Hiroshi**
**232 Nakatacho**
**Izumi-ku**
**Yokohama-shi Kanagawa-ken(JP)**
Inventor: **Kamei, Yoshihido**
**954 Yamanouchi**
**Kamakura-shi Kanagawa-ken(JP)**

(74) Representative: **Beresford, Keith Denis Lewis et al**
**BERESFORD & Co.**
**2-5 Warwick Court**
**High Holborn**
**London WC1R 5DJ (GB)**

Rank Xerox (UK) Business Services
(3.10/3.09/3.3.3)

PATENT ABSTRACTS OF JAPAN, vol. 7, no. 196 (P-219)(1341), 26 August 1983

PATENT ABSTRACTS OF JAPAN, vol. 7, no. 224 (P-227)(1369), 5 October 1983

PATENT ABSTRACTS OF JAPAN, vol. 10, no. 93 (P-445)(2150), 10 April 1986

Optical Storage Materials and Methods, SPIE, vol. 123, PG1-8, 1977

## Description

The present invention relates to a process for producing an optical recording medium for optical data recording and reproduction.

In recent years, as the amount of information circulated in the world increases, many proposals have been made about optical recording media for recording and reproduction of optical data, such as optical disks, optical cards and optical tapes as effective means for processing a wide variety of data. Among such optical recording media, there is known a type wherein binary-coded data are recorded and detected as a change in reflectivity or change in surface shape, such as presence or absence of pits, yielding a change in reflected light intensity.

As an optical recording medium utilizing a change in optical reflectivity, there has been proposed a so-called heat-mode recording material wherein the recording layer is irradiated with spots of an energy beam such as a laser beam to cause a local state change in the layer. This type of recording material is a so-called "DRAW (direct read after write)" medium which does not require a post treatment, such as development, after writing of data but can be directly read after writing, and is further capable of high density recording and also additional writing.

For such optical recording media, a system of forming grooves at a certain interval on the surface of a substrate as tracking servo guides for writing and reading is known. In this system, as the grooves function as guides for writing and reading, the tracking control accuracy of a laser beam is improved and a higher access speed can be accomplished than the conventional system using a substrate with no such guide grooves.

As a method of forming guide grooves on a substrate, a method of thermally transferring a stamper pattern by injection molding or hot pressing at a temperature above the melting point of a thermoplastic resin is known in case where the substrate is composed of such a thermoplastic resin, and also known is a method wherein a photosetting resin composition is applied onto a substrate and is cured under irradiation with ultraviolet rays, etc. and in contact with a stamper to photo-transfer the stamper pattern.

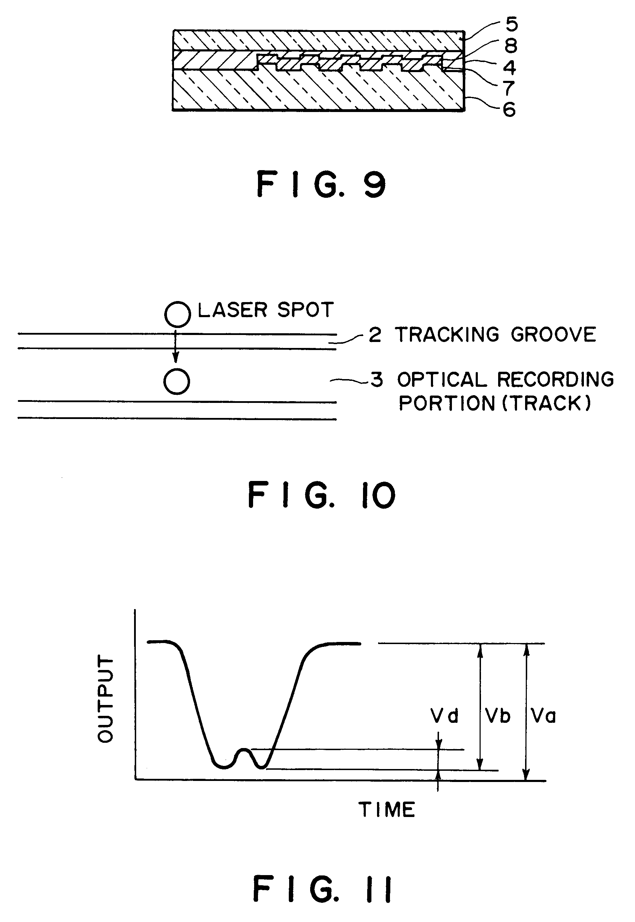

Figure 9 is a schematic sectional view of a conventional optical recording medium in the form of a card, which comprises a substrate 6 having tracking patterns 7, an adhesive layer 4, and a base 5. The optical recording medium is used for recording and reproduction of data by writing and readout by means of the substrate 6 and the track 7.

In the case of the above-mentioned thermal transfer, the track 7 is integral with and made of the same material as the substrate 6. On the other hand, in the case of the phototransfer, the track 7 is not made of the same material as but is bonded to the substrate 6. In any case, the substrate 6 is preliminarily provided with tracking grooves so as to allow tracking by phase lag of a laser beam through utilization of the fine unevenness pattern.

Such an optical recording medium has a structure comprising an optical recording layer formed on an uneven surface, so that the production thereof requires formation of an unevenness pattern on the substrate first of all. The conventional transfer process using a stamper involves several problems with respect to the yield of transfer of a stamper pattern, transfer time, and the durability and cost of the stamper affecting the productivity and production cost of the optical recording medium.

Further, as the recording sensitivity of the optical recording layer depends on the thickness of the layer, it is necessary to form the optical recording layer in a uniform thickness. However, as the optical recording layer was conventionally formed on an uneven substrate surface, it was difficult to form the layer in a uniform thickness. Further, the groove pattern was not well reproduced on the optical recording layer, so that a good tracking signal could not be obtained.

A method of forming servo guides without using a stamper has been disclosed in US Patent No 4,278,756, wherein a film of silver halide emulsion formed on a substrate is exposed in a servo guide pattern through a mask or by means of a laser photographic recording beam, followed by chemical or direct development, to form low reflectivity servo guides. However, when this method is applied to an optical recording layer comprising an organic film, however, the organic compound constituting the organic film is decomposed or denatured by the developing agent through reduction of, e.g, unsaturated bonds in the organic bond by the reducing function of the developing agent, thus resulting in decrease or loss of laser beam-absorbing capacity of the organic compound attributable to the unsaturated bonds.

EP-A-0108258 A1 discloses the use of lasers to form a master disc used for the manufacture of optical discs, the master disc having a first layer in which information is recorded and a second or surface layer in which tracking grooves are formed.

JP-A-60-227253 (A) discloses the recording of information at high density on a substrate based on the selective polymerisation of a polymerisable monomer.

JP-A-58-114340 (A) discloses a process for producing an original disc or stamper or a substrate of an information recording medium in which a photoresist layer on the substrate is irradiated with variable quantities of condensed laser light, followed by development and fixation. This means there will simultaneously be formed tracking grooves and signal information pits.

The article Optical Information Storage (1979) SPIE, Vol 177, review of optical storage media, R G Zech, discloses an optical card which can be used as a recording medium (record blank) which permits further optical recording. The recording layer employed uses a metal.

Sears, Zemansky, Young, University Physics, Chapter 42, Addison Wesley 1977, refers to the formation of interference fringes.

WO-82/02969 discloses a banking card having an optical high resolution reflective laser recording material such as a metallic film adhered thereon.

Optical storage materials and methods, SPIE, Vol 123, pages 1 to 8, 1977, discloses the use of a 1,5-diamino-anthraquinone as a material for making an ablative thin film of an optical recording medium.

JP-A-59-207039 discloses the irradiaton of a recording layer by means of a laser beam to form tracking grooves at intervals therealong and that this operation is carried out in advance of the formation of information pits by optical recording.

US 4,707,425 discloses at column 6, line 21, the irradiation of a recording layer with excimer laser light. The recording layer comprises an organometal complex having an absorption maximum in the wavelength region of 600 to 1200nm, and the irradiation diminishes the absorbing power of the organometal complex, thus bringing about optical recording.

According to the present invention there is provided a process for producing an optical recording medium having a tracking groove, which comprises providing a substrate having an optical recording layer, comprising organic dye and irradiating the recording layer with laser light to selectively remove irradiated regions of the recording layer to form the tracking groove, characterised in that the organic dye is removed by excimer laser light having an emission wavelength shorter than 650nm to form said tracking groove, leaving dye-containing regions of the recording layer exhibiting absorbtivity to light having a wavelength in the range from 650 to 900nm available for optical recording by a semiconductor laser.

According to the process of the invention, a tracking groove may be formed without requiring a developing treatment after the irradiation with the excimer laser beam, so that an optical recording medium may be provided with a tracking groove without using a stamper, and a good tracking signal may be obtained. Such a good tracking signal may be obtained presumably because of a large difference in reflectivity between the optical recording part (track) and tracking groove, a phase different in reflected light, and a combined effect of these.

This process may enable minute tracking grooves to be formed because the excimer laser light enables high definition to be achieved. The excimer laser light has a wavelength shorter than the absorption wavelength region of the recording layer. Thus, deterioration of the dye in the recording layer may not occur, so that regions of the dye left on the substrate, on which recording may be carried out, thereafter may exhibit high sensitivity to light from a semiconductor laser which is used for optical recording (post writing).

An embodiment of the invention will now be described by way of non-limiting example, with reference to the following drawings in which like parts which appear in more than one figure are designated by the same reference numerals.

BRIEF DESCRIPTION OF THE DRAWINGS

Figures 1 and 2 are schematic sectional views each illustrating an optical recording medium obtained by an embodiment of the process of the invention;

Figures 3A-3F, Figures 4A-4C, Figures 5A-5C, Figures 6A-6E and Figures 8A-8C (8C(1)-8C(3)), are respectively schematic sectional views for illustrating an embodiment of the invention.

Figure 9 is a schematic sectional view of an optical recording medium obtained by a conventional process;

Figure 10 is a schematic plan view illustrating laser spot scanning for measurement of a reflective contrast between the recording portion (track) and the tracking groove; and

Figure 11 is a diagram showing a change in output as a result of the measurement.

DETAILED DESCRIPTION OF THE INVENTION

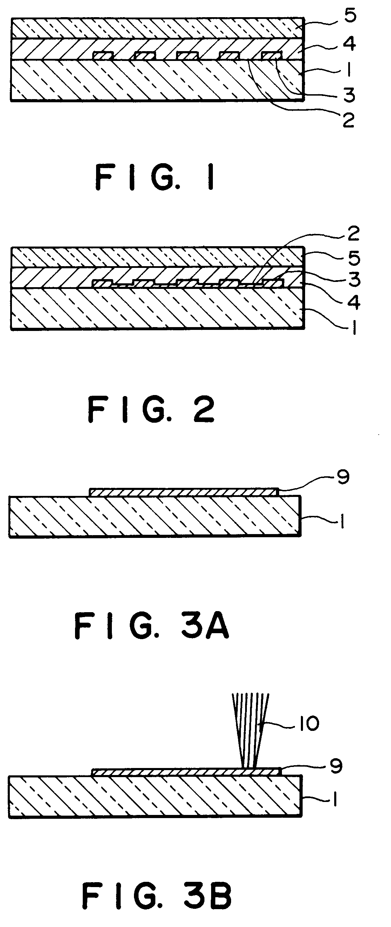

Referring to Figures 1 and 2 each showing an optical recording medium obtained by an embodiment of the invention, each optical recording medium comprises a substrate 1, tracking grooves 2, optical recording parts (tracks) 3, an adhesive layer 4, and a base 5.

A tracking groove 2 may preferably have a width of 2 - 4 $\mu$m, and an optical recording part 3 may preferably have a width of 3 - 10 $\mu$m. It is preferred that the tracking groove 2 is substantially free of the organic film constituting the optical recording part (as shown in Figure 1) or only with a slightly remaining film after scattering (as shown in Figure 2) such that it provides a difference in reflectivity satisfying the relationship of $0.3 \leq (R(d_1)-R(d_2))/ R(d_1) \leq 0.7$, wherein $R(d_1)$ denotes the

reflectivity at the optical recording part and $R(d_2)$ denotes the reflectivity at the tracking groove, in order to obtain a good tracking signal. At this time, it is preferred that the tracking groove 2 and the optical recording part 3 provide a reflective contrast of 0.45 or above. Herein, the reflective contrast is measured by using an ordinary optical readout system (e.g., one including a semiconductor laser of 830 nm at a power of 0.27 mW) and scanning an optical recording medium across a tracking groove with a laser beam spot (of, e.g., 3 $\mu$m diameter) as shown in Figure 10 and calculating the contrast according to the following definition based on a reflected light quantity curve as shown in Figure 11 detected by an oscilloscope connected to the readout system:

Reflective contrast = Vb/Va.

Next, the process for producing an optical recording medium with a patterned optical recording part will be explained with reference to embodiments shown in the Figures.

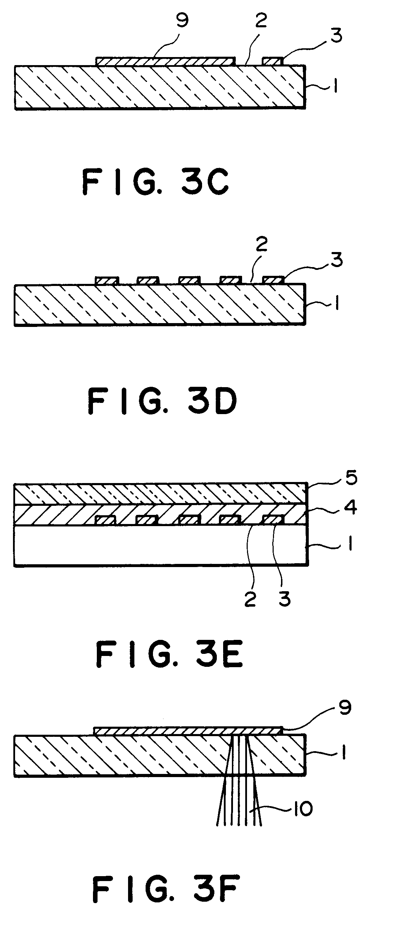

Figures 3A - 3E illustrate an embodiment of the invention wherein an optical recording layer 9 formed on a substrate 1 is irradiated with a scanning laser beam 10 condensed or focused to a tracking groove width. More specifically, an organic film 9 constituting an optical recording layer is formed on a substrate 1 (Figure 3A). Then, the organic film 9 is irradiated with scanning laser light 10 having a wavelength absorbable by the organic film and condensed to a desired tracking groove width (Figure 3B), thereby to form a tracking groove 2 (Figure 3C) by scattering of the irradiated portion of the organic film. The above steps are repeated to form tracking grooves 2 at a certain spacing corresponding to the width of an optical recording part 3, thus providing a patterned optical recording layer 3 (Figure 3D). Alternatively, the irradiation of the organic film 9 with laser light 10 can be effected through the substrate 1 as shown in Figure 3F.

Then, a base member 5 for reinforcement and easiness of handling is applied by the medium of an adhesive layer 4 to form an optical recording medium as shown in Figure 3E, which is substantially the same as the one shown in Figure 1.

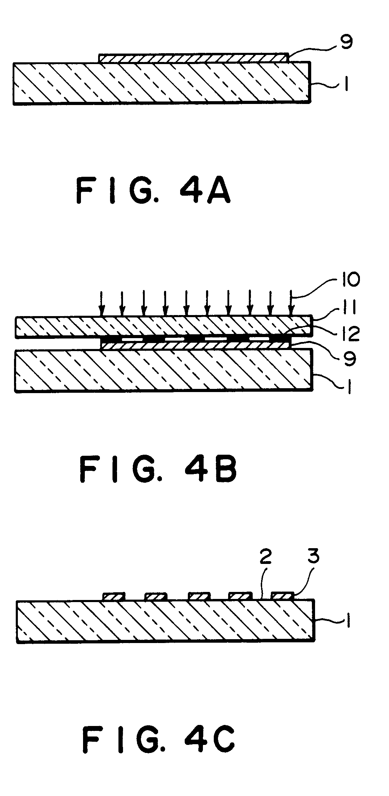

Figures 4A - 4C illustrate another embodiment of forming a patterned optical recording layer, wherein an optical recording layer formed on a substrate is irradiated with laser light through a mask disposed in contact with the optical recording layer. More specifically, an organic film 9 formed as an optical recording layer on a substrate 1 (Figure 4A) is irradiated with laser light 10 having a wavelength absorbable by the organic film 9 through a mask comprising a mask substrate 11 and a mask pattern 12 simultaneously over a desired area (Figure 4B), thereby to scatter the irradiated portion to leave the masked portion as the optical recording part 3 (Figure 4C). According to an embodiment shown in Figures 4A - 4C wherein the irradiation is effected through a mask in contact with an optical recording layer, the optical recording layer can be patterned at a high resolution.

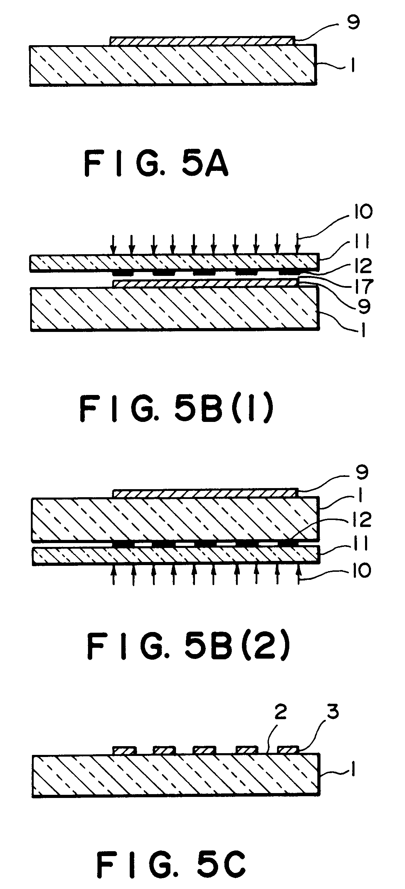

Alternatively, an optical recording layer 9 on a substrate 1 can be irradiated with laser light 10 through a mask disposed with a certain spacing 17 from the optical recording layer 9 (Figure 5B(1)) or through a mask disposed in contact with a side of the substrate 1 opposite to the side on which the optical recording layer 9 is formed.

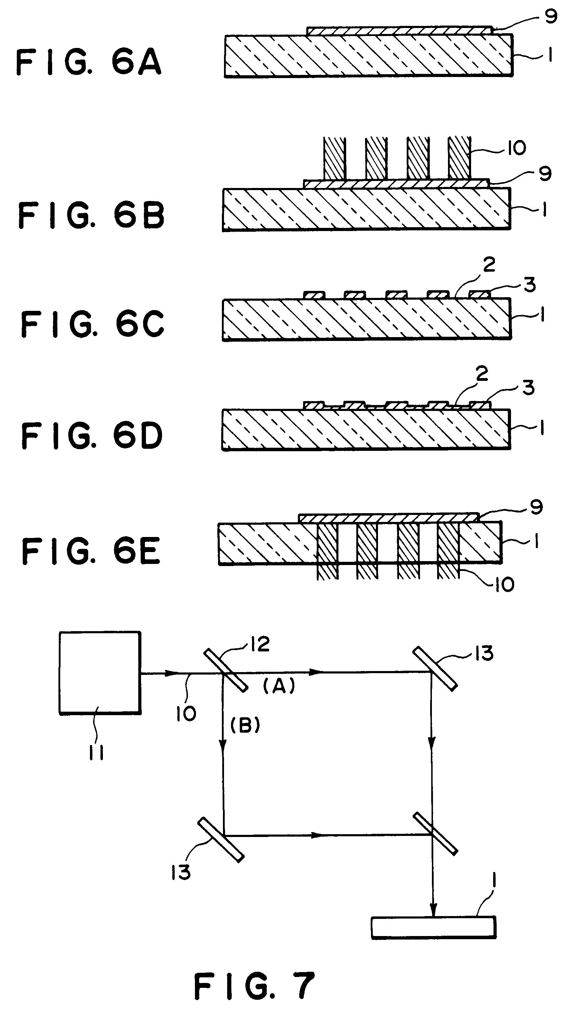

Figures 6A - 6E show another embodiment of the process for producing an optical recording medium having a patterned optical recording layer on a substrate.

More specifically, an organic film 9 formed on a substrate 1 (Figure 6A) is irradiated with laser light 10 having a wavelength absorbable by the organic film and patterned in stripes according to an optical interference method (Figure 6B), thereby to scatter the irradiated portion to form tracking grooves 2 and leave the masked portion as an optical recording part 3 (Figure 6C). The width of scattering of the irradiated portion of the organic film is determined depending on the intensity of the laser light and the sensitivity of the organic film.

The pattern formation according to the optical interference method may be effected by means of various optical systems. Figure 7 illustrates an example of such a system for interference of laser light. Referring to Figure 7, laser light 10 emitted from a laser source 11 is split by means of a half mirror (beam splitter) 12 into two fluxes along optical paths A and B. The fluxes A and B are then respectively reflected by mirrors 13 and then incident on a recording layer (not shown) on a substrate 1, where interference fringes are formed due to interference between the two fluxes. At this time, the angle of intersection of the fluxes A and B can be varied by changing the angles of the mirrors 13, so that the pitch of the interference fringes formed on the recording layer is changed. More specifically, the pitch of the interference fringes is determined by the angles of incidence of the fluxes A and B on the substrate 1 and can be controlled as desired.

The light intensity distribution of the interference fringes forms a sine curve. As a result, the portions of the optical recording layer receiving a photo-energy exceeding a certain level required for scattering are determined by intersections of the sine curve and the energy level. Thus, the line width, i.e., the width of the tracking groove, is governed by the intensity distribution of the interference fringes given by the laser energy.

In the embodiment using the interference method as explained above, it is also possible to irradiate the organic film 9 through the substrate 1 with such patterned laser light as shown in Figure 6E. Further, it is also possible to leave some organic film at the tracking grooves 2 (Figure 6D).

In the case of the groove (concavity) retaining an organic film, the groove itself can be used as an optical recording part and the convex portion of the optical recording layer can be used as a tracking guide by utilizing a phase difference.

After the formation of a patterned optical recording layer 3 on a substrate 1 as shown in Figure 4C, 5C, 6C or 6D, a base member 5 is applied on the optical recording layer 3 by the medium of an adhesive layer 4 to form an optical recording medium as shown in Figure 1 or Figure 2 according to the present invention.

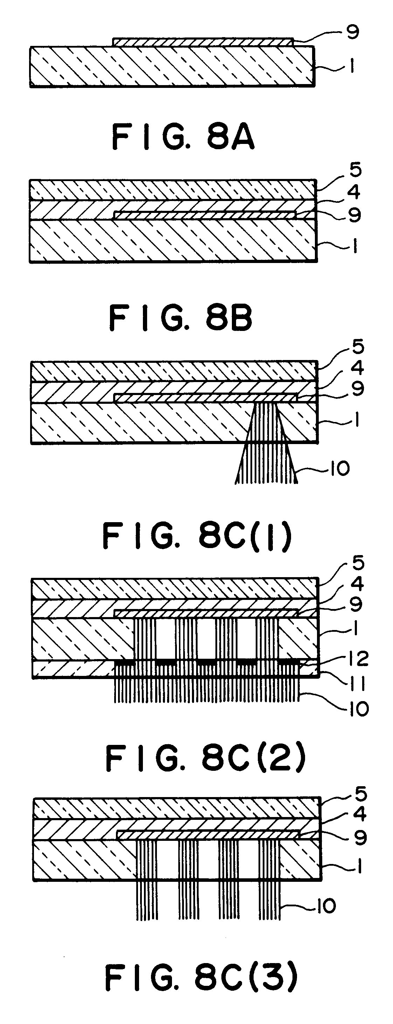

Alternatively, it is also possible to first form an organic film 9 on a substrate 1 (Figure 8A), bond it to a base 5 by the medium of an adhesive layer 4 (Figure 8B) and then apply the above-mentioned various methods of irradiation of the organic film 9 with laser light 10 for providing a patterned optical recording layer on the substrate 1 as shown in Figures 8C(1) - 8C(3). At this time, it is desirable to irradiate the organic film 9 from the side of the substrate 1 not having thereon the organic film 9 so that a patterned film can be formed at a good resolution with few interfaces causing possible reflection or refraction of the laser light.

In the various embodiments as mentioned above, the organic film 9 may preferably comprise a material compatible with light for use in optical recording and reproduction. For example, if the light beam for reproduction has a wavelength in the range of 650 nm - 900 nm, the organic film 9 should preferably form pits as parts for recording data bits providing a large difference in reflectivity from that of un-recorded parts. Further, the organic film 9 is required to show absorption in the above-mentioned range. Further, it is preferred that the organic film 9 causes a change in reflectivity at a low energy irradiation for recording. It is further preferred that the organic film 9 does not readily cause a change in reflectivity at recording parts (pits, etc.) or unrecorded parts. The material constituting the organic film 9 may preferably form a solution or a dispersion adapted for continuous application in view of the productivity of the recording medium.

Examples of such a material for organic film 9 may include: anthraquinone derivatives (particularly those having an indanthrene skeleton), dioxadine and its derivatives, triphenodithiazine compounds, phenanthrene derivatives, cyanine compounds, merocyanine compounds, pyrylium compounds, xanthine compounds, triphenylmethane compounds, croconium dyes, azo dyes, crocones, azines, indigoids, methine dyes, azulenes, squarium derivatives, sulfide dyes, and metal dithiolate complexes.

Such a dye or colorant as described above can be used alone or mixed with an agent for quenching the dye in the excited state to form a dye composition. The quenching agent may be selected from the examples thereof described hereinbelow in consideration of the compatibility or solubility with the dye and the solvent. The quencher may be added in several wt. % to 50 wt. % of the dye. Too little quencher fails to show its effect sufficiently, and the addition in excess of 50 wt. % can lead to a decrease in sensitivity. For these reasons, it is preferred to use the quencher in a proportion of 10 wt. % to 30 wt. %, particularly around 20 wt. %, of the dye.

Examples of the quencher may include various metal chelate compounds, such as four coordination-type compounds having central atoms such as Zn, Cu, Ni, Cr, Co, Mn, Pd and Zr with polydentate ligands inclusive of tetra-dentate ligands such as $N_4$, $N_2O_2$, $N_2S_2$, $S_4$, $O_2S_2$ and $O_4$; a combination of tri-dentate ligands such as $NS_2$, $O_3$ and $NOS$ with another ligand such as water, ammonia, halogen, phosphine, amine, arsine and olefin; or combination of bidentate ligands such as $N_2$, $NO$, $O_2$ and $S_2$; biscyclopentadienyl ligand, cyclopentadienyl-tropylinium ligand; or combination of the above. Examples of the quencher may further include various aromatic amines or diamines, nitrogen-containing aromatic compounds and their onium salts, such as aminium salt; diimmonium salt, pyridinium salt and quinolynium salt. The quencher may further be a pyrylium salt which is a salt of an oxygen-containing aromatic compound. These quenches can be used in combination of plural species in an appropriate composition variable in view of the coating characteristic of the resultant dye composition, and the stability, the optical characteristics (reflectivity and transmittance) and recording sensitivity of the coating film.

In order to improve the film property of the organic film, the dye or its composition can be used in combination with a binder wherein the dye is contained in a dispersion or an amorphous state (solid solution). The binder may be selected from a wide variety of resins. Examples of the binder may include cellulose esters such as nitrocellulose, cellulose phosphate, cellulose sulfate, cellulose acetate, cellulose propionate, cellulose butyrate, cellulose myristate, cellulose palmitate, cellulose acetate propionate, and cellulose acetate butyrate; cellulose ethers, such as methyl cellulose, ethyl cellulose, propyl cellulose, and butyl cellulose; vinyl resins, such as polystyrene, polyvinyl chloride, polyvinyl acetate, polyvinyl butyral, polyvinyl acetal, polyvinyl alcohol, and polyvinylpyrrolidone; copolymer resins, such as styrene-butadiene copolymer, styrene-acrylonitrile copolymer, styrene-butadiene-acrylonitrile copolymer, and vinyl chloride-vinyl acetate copolymer; acrylic resins, such as polymethyl methacrylate, polymethyl acrylate, polybutyl acrylate, polyacrylic acid, polymethacrylic acid, polyacrylamide, and polyacrylonitrile; polyesters, such as polyethylene terephthalate; polyacrylate resins, such as poly-(4,4′-isopropylidene-diphenylene-co-1,4-cyclohexylenedimethylenecarbonate), poly-(ethylenedioxy-3,3′-phenylene-thiocarbonate), poly-(4,4′-isopropylidenediphenylenecarbonate-co-terephthalate),poly(4,4′-isopropylidenediphenylenecarbonate), poly(4,4′-secbutyridene-diphenylenecarbonate), poly(4,4′-isopropylidene-diphenylenecarbonate-block-oxyethylene); polyamides, polyimides, expoxy resins, phenolic resins, and polyolefins such as polyethylene, polypropylene, and chlorinated polyolefins.

Such a binder resin may preferably be used in a proportion of 10 - 90 wt. %, particularly 30 -80 wt. %, of the dye or its composition.

When the organic film 9 is formed by coating, the dye or its composition may be dissolved in an organic solvent to form a coating composition. A particular organic solvent to be used can be different depending on the dye used, the kind of the binder when used, or whether the dye is contained in the binder in the form of a dispersion or amorphous state. However, examples of the organic solvent generally used for this purpose may include: alcohols, such as methanol, ethanol and isopropanols; ketones, such as acetone, methyl ethyl ketone and cyclohexanone; amides, such as N,N-dimethylformamide, and N,N-dimethylacetoamide; sulfoxides, such as dimethyl sulfoxide; ethers, such as tetrahydrofuran, dioxane, ethylene glycol monomethyl ether; esters, such as methyl acetate, ethyl acetate, and butyl acetate; aliphatic halogenated hydrocarbons, such as chloroform, methylene chloride, dichloroethylene, carbon tetrachloride, and trichloroethylene; and aromatic compounds, such as benzene, toluene, xylene, ligroin, monochlorobenzene, and dichlorobenzene.

The organic film 9 of such a dye or its composition may be formed by a known coating method, such as dip coating, spray coating, spinner coating, bar coating, roller coating, blade coating and curtain-flow coating from a coating composition as described above. The thickness of the organic film may generally be 500 - 2000 Å, preferably around 1000 Å. More specifically, a rather thin film is preferred in respect of the recording sensitivity and a rather thick film is preferred in respect of the reproduction S/N ratio. The optimum thickness can vary to some extent depending on the material for the organic film used.

The base member 5 for protection and easiness of handling may be composed of any material which has been used for such purpose, particularly for constituting a card base. Examples of such a material may include: polyvinyl chloride, vinyl chloride-vinyl acetate copolymer, polyvinylidene chloride, acrylic polymers such as polymethyl methacrylate, polystyrene, polypropylene, polycarbonate, epoxy resin, and acrylonitrilebutadiene-styrene copolymer. As the case may be, a sheet of metal such as iron, stainless steel, aluminum, tin, copper or zinc, synthetic or natural paper, etc. can be used for the base member 5. It is further possible to use a laminate of the above materials. The base member 5 may be subjected to a pretreatment for improvement of adhesiveness, such as corona discharge treatment, plasma treatment, and primer coating.

The adhesive layer 4 may for example be composed of a hot melt-type resin, such as ethylene-vinyl acetate copolymer, ethylene-ethyl acrylate copolymer, vinyl acetate-acrylate copolymer, and polyimide resin. Thermocuring type, photocuring type or photo-thermal-curing type adhesive can deteriorate the optical recording layer 4 and is not suitably be applied entirely over the optical recording layer 4 for entire surface bonding but can be used for local bonding or for entire surface bonding after the optical recording layer has been coated with a protective film. The adhesive can be a known one and need not be particularly limited.

The laser light 10 may have different wavelengths depending on the source but the wavelength is required to be absorbable by the optical recording layer 4. Further, the laser light 10 should preferably have a short wavelength, be capable of irradiating a large area and have a uniform energy. Preferred examples of the laser light source include excimer lasers containing XeF (351 nm), $N_2$ (337 nm), XeCl (308 nm), KrF (248 nm), KrCl (222 nm), ArF (193 nm), etc.

The mask substrate 11 constituting a mask as shown in Figures 4B, 5B and 8C(2) may comprise a material having a high transmittance with respect to the laser light used, thus not absorbing the laser light. The substrate 11 can comprise either an organic or inorganic material. The organic material may for example be acrylic resin, polyester, imide resin and polycarbonate. The inorganic material may for example be quartz glass, blue plate glass or silicon substrate.

The masking member or film 12 may preferably comprise a material absorbing the laser light used, thus showing little transmittance to the laser light. Examples of such a material may include Cr, Ni, Al, TiN and NiCr. It is possible to increase the resolving power by forming a reflection preventing layer on the masking film.

As described hereinabove, according to the process for producing an optical recording medium of the invention, the optical recording layer comprising an organic film is provided with a tracking groove without using a stamper. Further, the optical recording layer is formed on a flat substrate, so that it is formed in a uniform thickness, thus providing a stable recording sensitivity. Further, the tracking groove thus obtained provides a high reflective contrast (as defined hereinbefore) relative to the optical recording part, thus allowing stable tracking.

Hereinbelow, the present invention will be explained more specifically based on the Examples.

Example 1

A 0.4 mm-thick substrate of polymethyl methacrylate (hereinafter abbreviated as "PMMA") was coated with a coating solution of 2.7 wt. parts of a polymethine compound, 1,1,5,5-tetrakis(p-diethylaminophenyl)-2,4-pentadienium perchlorate, in 97.3 wt. parts of diacetone alcohol by the direct gravure process, followed by drying to form an about 900 Å-thick organic film as an optical recording layer.

The optical recording layer was irradiated with KrF laser light through a mask disposed in contact with the optical recording layer as shown in Figure 4B. The mask used at this time was one comprising a Cr masking film on a quartz substrate. The laser power was about 170 mJ for an area of 5 mm x 30 mm and a distance of 300 mm. As a result, the portion of the optical recording layer irradiated with the laser light was scattered to form a pattern including a 2.5 $\mu$m-wide tracking groove and a 9.5 $\mu$m-wide optical recording part.

Then, a 0.3 mm-thick PMMA base sheet or film was applied by the medium of a 0.05 mm-thick thermoplastic adhesive layer of ethylene-vinyl acetate copolymer on the optical recording layer provided with the tracking groove to obtain an optical recording medium.

The optical recording medium was subjected to data writing by using a semiconductor laser with an oscillation frequency of 830 nm to illuminate the optical recording part with spot of 1.5 $\mu$m diameter through the substrate at a recording power of 6 mW and a recording frequency of 2 MHz. Then, the recorded data were reproduced at a reading power of 0.8 mW and the reproduction waveform was subjected to spectrum analysis (scanning filter band width 30 KHz), whereby the C/N ratio was measured to be 0.54.

The tracking groove and the optical recording part showed reflectivities of about 5 % and 15 %, respectively, with respect to the reproduction laser light. Further, the tracking groove and the optical recording part gave a reflective contrast of 0.65, thus providing a sufficiently accurate tracking signal.

Example 2

A 0.4 mm-thick PMMA substrate was coated with a coating solution of 2.7 wt. parts of the same polymethine compound as used in Example 1 in 97.3 wt. parts of diacetone alcohol by the direct gravure process, followed by drying to form an about 900 Å-thick organic film as an optical recording layer.

The optical recording layer was irradiated with KrF laser light through a mask disposed with a spacing of 10 $\mu$m from the optical recording layer as shown in Figure 5B(1). The mask used at this time was one comprising a Cr masking film on a quartz substrate and disposed so that the Cr film faced the optical recording layer. The laser power was about 170 mJ for an area of 5 mm x 30 mm and a distance of 300 mm. As a result, the portion of the optical recording layer irradiated with the laser light was scattered to form a pattern including a 2.5 $\mu$m-wide tracking groove and a 9.5 $\mu$m-wide optical recording part.

Then, a 0.3 mm-thick PMMA base sheet was applied by the medium of a 0.05 mm-thick thermoplastic adhesive layer of ethylene-vinyl acetate on the optical recording layer provided with the tracking groove to obtain an optical recording medium.

The optical recording medium was subjected to data writing by using a semiconductor laser with an oscillation frequency of 830 nm to illuminate the optical recording part with a spot of 1.5 $\mu$m diameter through the substrate at a recording power of 6 mW and a recording frequency of 2 MHZ. Then, the recorded data were reproduced at a reading power of 0.8 mW and the reproduction waveform was subjected to spectrum analysis (scanning filter band width 30 KHz), whereby the C/N ratio was measured to be 0.52. The tracking groove and the optical recording part gave a reflective contrast of 0.64, thus providing a sufficiently accurate tracking signal.

Example 3

A 0.4 mm-thick PMMA substrate was coated with a coating solution of 3 wt. parts of the same polymethine compound as used in Example 1 in 97 wt. parts of dichloroethane by spinner coating, followed by drying to form an about 1000 Å-thick organic film as an optical recording layer.

The optical recording layer was irradiated with interference fringes of ArF laser light having a wavelength of 193 nm and having passed through an interference system as shown in Figure 7. The laser power at this time was about 170 mJ/30 cm for an area of 5 mm x 30 mm. As a result, a pattern with grooves of 2.5 μm in width and 12 μm in spacing between adjacent grooves was formed on the substrate.

Then, a 0.3 mm-thick PMMA base sheet was applied by the medium of a 0.05 mm-thick thermoplastic adhesive layer of ethylene-vinyl acetate copolymer on the optical recording layer provided with the tracking groove to obtain an optical recording medium.

The optical recording medium was subjected to data writing by using a semiconductor laser with an oscillation frequency of 830 nm to illuminate the optical recording part with a spot of 1.5 μm diameter through the substrate at a recording power of 6 mW and a recording frequency of 2 MHz. Then, the recorded data were reproduced at a reading power of 0.8 mW and the reproduction waveform was subjected to spectrum analysis (scanning filter band width 30 KHz), whereby the C/N ratio was measured to be 0.5. Further, the tracking groove and the optical recording part gave a reflective contrast of 0.69, thus providing a sufficiently accurate tracking signal.

Example 4

A 0.4 mm-thick PMMA substrate was coated with a coating solution of 6 wt. parts of the same polymethine compound as used in Example 1 in 94 wt. parts of diacetone alcohol by roller coating, followed by drying to form an about 2000 Å-thick organic film as an optical recording layer.

The optical recording layer was irradiated with one shot of interference fringes of KrF laser light having a wavelength of 248 nm and having passed through an interference system as shown in Figure 7. The laser power was about 120 mJ/30 cm for an area of 5 mm x 30 mm. As a result, a optical recording layer pattern with grooves of 2.5 μm in width, 12 μm in spacing and 1000 Å in depth was formed on the substrate.

The substrate with the optical recording layer pattern was formed into an optical recording medium, and subjected to recording and reproduction tests in the same manner as in Example 1, whereby a C/N ratio of 0.55 was obtained. The optical recording part and the tracking groove gave a difference in height of about 1000 Å, and the ratio $R(d_2)/R(d_1)$ was 0.5. Further, the optical recording part and the tracking groove showed a reflective contrast of 0.51.

## Claims

1. A process for producing an optical recording medium having a tracking groove, which comprises providing a substrate having an optical recording layer, comprising organic dye and irradiating the recording layer with laser light to selectively remove irradiated regions of the recording layer to form the tracking groove, characterised in that the organic dye is removed by excimer laser light having an emission wavelength shorter than 650nm to form said tracking groove, leaving dye-containing regions of the recording layer exhibiting absorbtivity to light having a wavelength in the range from 650 to 900nm available for optical recording by a semiconductor laser.

2. A process according to claim 1, wherein the record layer comprises a polymethine dye.

3. A process according to claim 2, wherein the polymethine dye is 1,1,5,5-tetrakis-(p-diethylaminophenyl)-2,4-pentadienium perchlorate.

4. A process according to claim 1, wherein the dye is selected from anthraquinone derivatives, dioxadine and its derivatives, triphenodithiazine compounds, phenanthrene derivatives, cyanine compounds, merocyanine compounds, pyrylium compounds, xanthene compounds, triphenylmethane compounds, croconium dyes, azo dyes, crocones, azines, indigoids, methine dyes, azulenes, squarium derivatives, sulfide dyes, and metal dithiolate complexes.

5. A process according to any preceding claim, wherein the dye is mixed with a quenching agent for quenching dye in its exicted state.

6. A process according claim 5, wherien the dye is mixed with 10-30 wt% of the quenching agent based on the weight of the dye.

7. A process according to claim 6, wherein the dye is mixed with about 20 wt% of the quenching agent based on the weight of the dye.

8. A process according to any of claims 5 to 7, wherien the quenching agent is a metal chelate compound, an aromatic amine or diamine, a nitrogen containing aromatic compound or an aminium, diimmonium, pyridinium or quinolynium salt thereof or a pyrilium salt of an oxygen-containing aromatic compound.

9. A process according to any preceding claim wherein the optical recording layer is of thickness 50-200 nm (500-2000Å).

10. A process according to claim 9, wherein the optical recording layer is of thickness 80-120 nm (800-1200Å).

11. A process according to any preceding claim, wherein the substrate is irradiated by any of methods (a) to (c):
(a) condensing the laser light to a desired tracking groove width and irradiating the recording layer with the condensed laser light;
(b) irradiating the recording layer with laser light through a mask having a pattern defining the tracking groove, the mask being disposed in contact with the recording layer or at a spacing from the recording layer;
(c) irradiating the recording layer with laser light which has been patterned through optical interference.

12. A process according to claim 11, wherein the recording layer is irradiated with laser light through a mask disposed on a side of the substrate opposite to the side having the organic film.

13. A process according to any preceding claim, wherein the recording layer and the tracking groove show reflectiveness $R(d_1)$ and $R(d_2)$, respectively, satisfying the relationship of $0.3 \leqq R(d_2)/R(d_1) \leqq 0.7$.

14. A process according to any preceding claim, wherein the tracking groove is formed by complete removal of the recording layer at the irradiated portions thereof.

15. A process according to any preceding claim, wherein the recording layer and tracking groove provide a reflective contrast of 0.45 or higher.

16. A process according to any preceding claim, wherein the recording layer is covered with a protective based before the laser irradiation.

17. A process according to any of claims 1-15, wherein the recording layer after the laser irradiation is covered with a protective base adhered by means of an adhesive layer.

18. A process according to any preceding claim, wherein the optical recording medium is generally in the form of a card.

19. Use of an optical recording medium made by the process of any of claims 1 to 18 for the optical recording of information.

20. Use of an optical recording medium made by the process of any of claims 1 to 18 for the optical reproduction of information.

**Patentansprüche**

1. Verfahren zur Herstellung eines optischen Aufzeichnungsmaterials mit einer Rille zur Spurnachführung, umfassend die Bereitstellung eines Substrats mit einer optischen, organischen Farbstoff enthaltenden Aufzeichnungsschicht, und die Bestrahlung der Aufzeichnungsschicht mit Laserlicht, um auf selektive Weise bestrahlte Bereiche auf der Aufzeichnungsschicht unter Bildung der Rille zur Spurnachführung zu entfernen, **dadurch gekennzeichnet, daß** der organische Farbstoff durch Excimer-Laserlicht mit einer Emissions-Wellenlänge von kleiner als 650 nm unter Bildung der Rille zur Spurnachführung entfernt wird, wobei farbstoffhaltige Bereiche der Aufzeichnungsschicht zurückbleiben, die ein Absorptionsvermögen gegenüber Licht mit einer Wellenlänge im Bereich von 650 bis 900 nm zeigen, geeignet für die optische Aufzeichnung mit einem Halbleiterlaser.

2. Verfahren nach Anspruch 1, **dadurch gekennzeichnet, daß** die Aufzeichnungsschicht einen Polymethin-Farbstoff umfaßt.

3. Verfahren nach Anspruch 2, **dadurch gekennzeichnet, daß** der Polymethinfarbstoff 1,1,5,5-Tetrakis-(p-diethylaminophenyl)-2,4-pentadieniumperchlorat ist.

4. Verfahren nach Anspruch 1, **dadurch gekennzeichnet, daß** der Farbstoff aus Anthrachinonderivaten, Dioxadin und seinen Derivaten, Triphenodithiazinverbindungen, Phenanthrenderivaten, Cyaninverbindungen, Merocyaninverbindungen, Pyryliumverbindungen, Xanthenverbindungen, Triphenylmethanverbindungen, Krokoniumfarbstoffen, Azofarbstoffen, Krokonen (crocones), Azinen, Indigoiden, Methinfarbstoffen, Azulenen, Squariumderivaten (squarium derivatives), Sulfidfarbstoffen und Metalldithiolatkomplexen ausgewählt ist.

5. Verfahren nach einem der vorstehenden Ansprüche, **dadurch gekennzeichnet, daß** der Farbstoff mit einem Quencher zum Quenchen eines Farbstoffs in seinem angeregten Zustand gemischt wird.

6. Verfahren nach Anspruch 5, **dadurch gekennzeichnet**, **daß** der Farbstoff mit 10 - 30 Gew.-% des Quenchers, basierend auf dem Gewicht des Farbstoffs, gemischt wird.

7. Verfahren nach Anspruch 6, **dadurch gekennzeichnet, daß** der Farbstoff mit ungefähr 20 Gew-% des Quenchers, basierend auf dem Gewicht des Farbstoffs, gemischt wird.

8. Verfahren nach einem der Ansprüche 5 bis 7, **dadurch gekennzeichnet, daß** der Quencher eine Metallchelatverbindung, ein aromatisches Amin oder Diamin, eine stickstoffhaltige aromatische Verbindung oder ein Aminium-, Diimmonium-, Pyridinium- oder Chinoliniumsalz davon oder ein Pyriliumsalz einer sauerstoffhaltigen aromatischen Verbindung ist.

9. Verfahren nach einem der vorstehenden Ansprüche, **dadurch gekennzeichnet, daß** die Dicke der optischen Aufzeichnungsschicht 50 bis 200 nm (500 - 2000 Å) beträgt.

10. Verfahren nach Anspruch 9, **dadurch gekennzeichnet, daß** die Dicke der optischen Aufzeichnungsschicht 80 - 120 nm (800 - 1200 Å) beträgt.

11. Verfahren nach einem der vorstehenden Ansprüche, **dadurch gekennzeichnet, daß** das Substrat nach einem der Verfahren (a) bis (c) bestrahlt wird:
    (a) Bündelung des Laserlichts bis auf eine gewünschte Breite der Rille zur Spurnachführung und Bestrahlung der Aufzeichnungsschicht mit dem gebündelten Laserlicht;
    (b) Bestrahlung der Aufzeichnungsschicht mit Laserlicht durch eine Maske mit einem die Rille zur Spurnachführung definierendem Muster, wobei die Maske in Kontakt mit der Aufzeichnungsschicht stehend oder in Entfernung zur Aufzeichnungsschicht angeordnet ist;
    (c) Bestrahlung der Aufzeichnungsschicht mit Laserlicht, das durch optische Interferenz gemustert wurde.

12. Verfahren nach Anspruch 11, **dadurch gekennzeichnet, daß** die Aufzeichnungsschicht mit Laserlicht durch eine Maske bestrahlt wird, die auf einer Seite des Substrats angebracht ist, welche zu der Seite mit dem organischen Film entgegengesetzt ist.

13. Verfahren nach einem der vorstehenden Ansprüche, **dadurch gekennzeichnet, daß** die Aufzeichnungsschicht und die Rille zur Spurnachführung jeweils ein Reflexionsvermögen R(d1) und R(d2) zeigen, das der Beziehung $0,3 \leq R(d_2)/R(d_1) \leq 0,7$ genügt.

14. Verfahren nach einem der vorstehenden Ansprüche, **dadurch gekennzeichnet, daß** die Rille zur Spurnachführung durch die vollständige Entfernung der Aufzeichnungsschicht an deren bestrahlten Bereichen gebildet wird.

15. Verfahren nach einem der vorstehenden Ansprüche, **dadurch gekennzeichnet, daß** die Aufzeichnungsschicht und die Rille zur Spurnachführung einen Reflexionskontrast von 0,45 oder höher liefern.

16. Verfahren nach einem der vorstehenden Ansprüche, **dadurch gekennzeichnet, daß** die Aufzeichnungsschicht vor der Laserbestrahlung mit einer schützenden Grundschicht bedeckt wird.

17. Verfahren nach einem der Ansprüche 1 - 15, **dadurch gekennzeichnet, daß** die Aufzeichnungsschicht nach der Laserbestrahlung mit einer mittels einer Klebstoffschicht befestigten, schützenden Grundschicht bedeckt wird.

18. Verfahren nach einem der vorstehenden Ansprüche, **dadurch gekennzeichnet, daß** das optische Aufzeichnungsmaterial im allgemeinen in Form einer Karte vorliegt.

**Revendications**

1. Procédé de production d'un support d'enregistrement optique possédant une rainure de guidage, qui comprend la production d'un substrat possédant une couche d'enregistrement optique comprenant un colorant organique, et l'irradiation de la couche d'enregistrement avec une lumière laser pour éliminer sélectivement les régions irradiées de la couche d'enregistrement pour former la rainure de guidage, caractérisé en ce que le colorant organique est éliminé au moyen de la lumière d'un laser à excimère ayant une longueur d'onde d'émission inférieure à 650 nm pour former ladite rainure de guidage, en laissant des régions, contenant le colorant, de la couche d'enregistrement présentant une capacité d'absorption de lumière ayant une longueur d'onde comprise dans l'intervalle de 650 à 900 nm disponibles pour un enregistrement optique par un laser à semiconducteur.

**2.** Procédé suivant la revendication 1, dans lequel la couche d'enregistrement comprend un colorant du type polyméthine.

**3.** Procédé suivant la revendication 2, dans lequel le colorant du type polyméthine est le perchlorate de 1,1,5,5-tétrakis-(p-diéthylaminophényl)-2,4-pentadiénium.

**4.** Procédé suivant la revendication 1, dans lequel le colorant est choisi entre des dérivés d'anthraquinone, la dioxadine et ses dérivés, des composés de triphénodithiazine, des dérivés de phénanthrène, des composés de cyanine, des composés de mérocyanine, des composés de pyrylium, des composés de xanthène, des composés de triphénylméthane, des colorants du type croconium, des colorants azoïques, des crocones, des azines, des colorants du type de l'indigo, des colorants du type méthine, des azulènes, des dérivés de squarium, des colorants du type sulfure et des complexes à base de dithiolates métalliques.

**5.** Procédé suivant l'une quelconque des revendications précédentes, dans lequel le colorant est mélangé à un agent d'extinction pour l'extinction du colorant à son état excité.

**6.** Procédé suivant la revendication 5, dans lequel le colorant est mélangé à une quantité de 10 à 30 % en poids de l'agent d'extinction sur la base du poids du colorant.

**7.** Procédé suivant la revendication 6, dans lequel le colorant est mélangé à une quantité d'environ 20 % en poids de l'agent d'extinction sur la base du poids du colorant.

**8.** Procédé suivant l'une quelconque des revendications 5 à 7, dans lequel l'agent d'extinction est un chélate métallique, une amine ou diamine aromatique, un composé aromatique azoté ou un de ses sels d'aminium, de diimmonium, de pyridinium ou de quinolynium ou bien un sel de pyrilium d'un composé aromatique oxygéné.

**9.** Procédé suivant l'une quelconque des revendications précédentes, dans lequel la couche d'enregistrement optique possède une épaisseur de 50 à 200 nm (500 à 2000 Å).

**10.** Procédé suivant la revendication 9, dans lequel la couche d'enregistrement optique possède une épaisseur de 80 à 120 nm (800 à 1200 Å).

**11.** Procédé suivant l'une quelconque des revendications précédentes, dans lequel le substrat est irradié par n'importe lequel des procédés (a) à (c) :

(a) condensation de la lumière laser à une largeur désirée de rainure de guidage et irradiation de la couche d'enregistrement avec la lumière laser condensée ;

(b) irradiation de la couche d'enregistrement avec une lumière laser à travers un masque possédant un motif définissant la rainure de guidage, le masque étant disposé en contact avec la couche d'enregistrement ou étant espacé de la couche d'enregistrement ;

(c) irradiation de la couche d'enregistrement avec une lumière laser qui a été soumise à la formation d'un motif par interférence optique.

**12.** Procédé suivant la revendication 11, dans lequel la couche d'enregistrement est irradiée avec une lumière laser à travers un masque placé d'un côté du substrat opposé au côté portant le film organique.

**13.** Procédé suivant l'une quelconque des revendications précédentes, dans lequel la couche d'enregistrement et la rainure de guidage présentent respectivement des réflectivités $R(d_1)$ et $R(d_2)$ satisfaisant à la relation $0,3 \leq R(d_2)/R(D_1) \leq 0,7$.

**14.** Procédé suivant l'une quelconque des revendications précédentes, dans lequel la rainure de guidage est formée par élimination totale de la couche d'enregistrement au niveau de ses portions irradiées.

**15.** Procédé suivant l'une quelconque des revendications précédentes, dans lequel la couche d'enregistrement et la rainure de guidage présentent un contraste de réflexion égal ou supérieur à 0,45.

**16.** Procédé suivant l'une quelconque des revendications précédentes, dans lequel la couche d'enregistrement est couverte avec un élément protecteur de base avant l'irradiation avec un laser.

**17.** Procédé suivant l'une quelconque des revendications 1 à 15, dans lequel la couche d'enregistrement, après irradiation avec un laser, est couverte avec un élément protecteur de base fixé au moyen d'une couche d'un adhésif.

**18.** Procédé suivant l'une quelconque des revendications précédentes, dans lequel le support d'enregistrement optique est généralement sous forme d'une carte.

EP 0 287 394 B1

FIG. 1

FIG. 2

FIG. 3A

FIG. 3B

FIG. 3C

FIG. 3D

FIG. 3E

FIG. 3F

F I G. 4A

F I G. 4B

F I G. 4C

EP 0 287 394 B1

FIG. 5A

FIG. 5B(1)

FIG. 5B(2)

FIG. 5C

FIG. 6A

FIG. 6B

FIG. 6C

FIG. 6D

FIG. 6E

FIG. 7

F I G. 8A

F I G. 8B

F I G. 8C(1)

F I G. 8C(2)

F I G. 8C(3)

# F I G. 9

○ LASER SPOT

2 TRACKING GROOVE

3 OPTICAL RECORDING PORTION (TRACK)

# F I G. 10

OUTPUT

Vd Vb Va

TIME

# F I G. 11